# EUROPEAN PATENT SPECIFICATION

(11) **EP 2 162 018 B1**
(45) Date of publication and mention of the grant of the patent: **17.10.2012**
(21) Application number: 08748377.2
(22) Date of filing: 05.06.2008
(51) Int. Cl.: A23L 1/22

(54) **SALT ENHANCEMENT**
SALZVERBESSERUNG
RENFORCEMENT DU GOÛT SALÉ

(30) Priority: 06.06.2007 US 933357 P
(43) Date of publication of application: 17.03.2010
(73) Proprietor: Givaudan SA, 1214 Vernier (CH)
(72) Inventor: GRAY, Kimberley, Loveland, OH 45140 (US); YEP, Gregory L., Cincinnati, OH 45242 (US); EILERMAN, Robert G., Manhasset, NY 11030 (US)
(74) Representative: McStea, John Anthony
(86) International application number: PCT/CH2008/000247
(87) International publication number: WO 2008/148234

(56) References cited:
- WO-A-2007/019719
- US-A- 5 176 934
- US-A1- 2006 276 667
- US-A1- 2007 059 417

## Description

This disclosure relates to a method of salt enhancement.

The enhancement of salt flavor in foodstuffs has become very important since the traditional method of salt enhancement (simply adding more salt) may have serious health consequences. As a result of this concern, there are now many salt-reduced products on the market, but many of these are regarded by consumers as lacking flavor. Something that enhances the perception of saltiness and therefore the flavor without actually using more salt is therefore highly desirable. Examples of salt enhancing compounds and compositions include proteolysed protein sources (EP 0 677 249) and L-aspartic acid/L-arginine blend (US 5,176,934). More recently, it has been disclosed in US published application 2007/059417 that the well-known cooling compounds WS-3 and WS-23 also have salt-enhancing properties.

By "cooling compound" is meant a chemical compound that exerts a cooling effect on the skin or the mucous membranes of the body. These are common ingredients in foodstuffs, beverages, chewing gums, dentifrices, mouthwashes, medical products such as lotions, creams and salves, and personal care products. A substantial number of such compounds are known.

It has now been found that it is possible to enhance the flavour of compositions by the addition thereto of certain compounds. There is therefore provided a method of enhancing the perceived saltiness of an orally-ingestible composition, comprising the incorporation therein of a compound which is a cooling compound in a proportion that is below the cooling threshold but that provides a salt enhancement, the cooling compound being selected from N-(4-cyanomethylphenyl) p-menthanecarboxamide and N-(2-pyridin-2-ylethyl) p-menthanecarboxamide [(1R,2S,5R)-2-isopropyl-5-methyl-N-(2-(pyridin-2-yl)ethyl)cyclohexanecarboxamide], used at a concentration of 0.005ppm maximum.

The compounds and their preparation are described in US published application 2006-0276667 and International publication WO 2007/019719.

It is possible and permissible to use a mixture of two or more of such compounds in the present method; this is encompassed by the use of the expression "a compound". The quantity of cooling compound required varies with the compound, but the salt enhancement is given at a proportion considerably lower than that proportion regarded as the minimum level for cooling effect. An appropriate level is easily found for any compound by non-inventive routine experimentation. For most cooling compounds, as a general rule, the maximum level is about 0.05ppm, particularly from about 0.001 to about 0.05 ppm, cooling compound in a composition whose salt perception is to be raised. These levels are appropriate for well-known and widely-commercialised cooling compounds such as menthol, menthyl lactate, TK-10, WS-3 and WS-23.

In a particularly surprising aspect, N-(4-cyanomethylphenyl) p-menthanecarboxamide and N-(2-pyridin-2-ylethyl) p-menthanecarboxamide [(1R,2S,5R)-2-isopropyl-5-methyl-N-(2-(pyridin-2-yl)ethyl)cyclohexanecarboxamide] have salt enhancement thresholds up to one order of magnitude lower than known cooling compounds.. In these cases, the upper threshold value for salt enhancement is 0.005ppm, particularly from 0.0001 to 0.005 ppm.

The following table shows examples of particular concentrations:

| Compound | Level at which saltiness increase perceived (ppm) | Threshold level at which cooling effect detected (ppm) - estimated |
|---|---|---|
| Compound 1* | 0.005 | 0.08 |
| Compound 2** | 0.005 | 0.08 |
| WS3 | 0.05 | 1 |
| WS23 | 0.05 | 1.5 |
| Menthol | 0.05 | 1.5 |
| menthyl lactate | 0.05 | 0.8 |
| TK-10 | 0.005 | 0.8 |

| | | |
|---|---|---|
| * N-(4-cyanomethylphenyl) p-menthanecarboxamide ** N-(2-pyridin-2-ylethyl) p-menthanecarboxamide [(1R,2S,5R)-2-isopropyl-5-methyl-N-(2-(pyridin-2-yl)ethyl)cyclohexanecarboxamide] | | |

The compounds may be added to a composition by entirely conventional means. In such compositions, their presence raises substantially the perception of saltiness, thus allowing the actual salt content to be substantially reduced while maintaining taste and consumer acceptance.

The invention is further described with reference to the following non-limiting example.

### Example

A variety of compounds (listed in the table above) was tested in a salt-reduced broth. The compounds concerned were simply added to samples of the broth in a variety of concentrations and stirred in. The samples were tested by their being submitted to a tasting panel, which recorded its perceptions as to which sample (and therefore at what level of compound) a perception of increased saltiness was observed. The results are recorded in the table in the specification above.

It can be seen that all of the compounds had an effect on the perceived saltiness, but Compounds 1 and 2 had a considerably greater effect.

Although the process and compounds have been described in detail through the above detailed description and the preceding example, these are for the purpose of illustration only and it is understood that variations and modifications can be made by one skilled in the art without departing from the scope of the invention. It should be understood that the embodiments described above are not only in the alternative, but can be combined.

## Claims

1. A method of enhancing the perceived saltiness of an orally-ingestible composition, comprising the incorporation therein of a compound which is a cooling compound in a proportion that is below the cooling threshold but that provides a salt enhancement, the cooling compound being selected from N-(4-cyanomethylphenyl) p-menthanecarboxamide and N-(2-pyridin-2-ylethyl) p-menthanecarboxamide [(1R,2S,5R)-2-isoprooyl-5-methyl-N-(2-(pyridin-2-yl)ethyl)cyclohexanecarboxamide], used at a concentration of 0:005ppm maximum.

2. A method according to claim 1, in which the concentration is from 0.0001 ppm to 0.005 ppm.

## Patentansprüche

1. Verfahren zur Verstärkung der wahrgenommenen Salzigkeit einer oral aufnehmbaren Zusammensetzung, das das Einarbeiten einer Verbindung, bei der es sich um eine kühlende Verbindung handelt, in einem Anteil, der unterhalb der Kühlschwelle liegt, der jedoch eine Verstärkung des Salzes hervorruft, umfasst, wobei die kühlende Verbindung aus der Reihe N-(4-Cyanomethylphenyl)-p-Menthancarboxamid und N-(2-Pyridin-2-ylethyl)-p-Menthancarboxamid[(1R,2S,5R)-2-isopropyl-5-methyl-N-(2-(pyridin-2-yl)ethyl)cyclohexancarboxamid] ausgewählt ist, in einer Konzentration von maximal 0,005 ppm.

2. Verfahren nach Anspruch 1, bei dem die Konzentration im Bereich von 0,0001 ppm bis 0,005 ppm liegt.

## Revendications

1. Méthode pour renforcer le goût salé perçu d'une composition ingérable par voie orale comprenant l'incorporation dans celle-ci d'un composé qui est un composé rafraîchissant dans une proportion qui est inférieure au seuil de rafraîchissement, mais qui assure un renforcement du goût salé, le composé rafraîchissant étant choisi parmi le N-(4-cyanométhylphényl)p-menthanecarboxamide et le N-(2-pyridin-2-yléthyl)p-menthanecarboxamide[(1R,2S,5R)-2-isopropyl-5-méthyl-N-(2-(pyridin-2-yl)éthyl)cyclohexanecarboxamide], utilisé à une concentration de 0,005 ppm au maximum.

2. Méthode selon la revendication 1, **caractérisée en ce que** la concentration est de 0,0001 ppm à 0,005 ppm.
